Europäisches Patentamt

**European Patent Office**

**Office européen des brevets**

(11) Numéro de publication: **0 216 713**
**A1**

(12) **DEMANDE DE BREVET EUROPEEN**

(21) Numéro de dépôt: **86420218.9**

(22) Date de dépôt: **25.08.86**

(51) Int. Cl.⁴: **B 65 G 57/112**

(30) Priorité: **29.08.85 FR 8513358**

(43) Date de publication de la demande:
**01.04.87 Bulletin 87/14**

(84) Etats contractants désignés:
**AT BE CH DE GB IT LI LU NL SE**

(71) Demandeur: **CEGEDUR SOCIETE DE
TRANSFORMATION DE L'ALUMINIUM PECHINEY
23, Rue Balzac
F-75008 Paris(FR)**

(72) Inventeur: **Puig, Michel
10, rue Louis Boch
F-74000 Annecy(FR)**

(72) Inventeur: **Mathelin, Gabriel
20, rue des Pâquerettes Cran Gevrier
F-74000 Annecy(FR)**

(72) Inventeur: **Philippe, Jean-Luc
Les Morets Beaurepaire en Bresse
F-71580 Sacy(FR)**

(74) Mandataire: **Séraphin, Léon et al,
PECHINEY 28, rue de Bonnel
F-69433 Lyon Cedex 3(FR)**

(54) **Dispositif pour empilage en continu d'objets plats, circulaires et rigides.**

(57) Dispositif comprenant un bâti mobile muni de deux bras verticaux (13) et un support arrière axial (14), circonscrits au diamètre des disques à empiler, et disposés symétriquement par rapport à la direction d'avancement des produits, est caractérisé en ce que l'extrémité inférieure d'au moins un des bras et/ou du support arrière sont munis d'un mors de serrage (15) dont le déplacement est sensiblement perpendiculaire à l'axe (11) de la pile de disques (9) en cours de formation et dont la face d'appui (28) est sensiblement parallèle à cet axe (11).

./...

Croydon Printing Company Ltd.

FIG.1

# DISPOSITIF POUR EMPILAGE EN CONTINU D'OBJETS PLATS CIRCULAIRES ET RIGIDES

L'invention concerne un dispositif d'empilage en continu, sous forme de piles verticales, disposables côte-à-côte, d'objets plats circulaires et rigides, sur un support horizontal adéquat, en particulier, des disques circulaires découpés dans des bandes ou tôles métalliques.

On connaît déjà de tels dispositifs, par exemple, celui décrit dans la demande de brevet français FR-A 2411 148 (équivalent à US-A-4 169 586).

Ce dispositif présente cependant l'inconvénient de détériorer les surfaces inférieure ou supérieure des disques, qui sont en effet retenus ou supportés par des doigts éclipsables (46, 48); la manoeuvre de ces organes provoque généralement des rayures ou autres défauts de surface sur les disques.

Remarque : dans toute la suite du texte le mot "disque" désignera tout objet plat, circulaire et rigide.

Le problème que l'on se propose de résoudre est celui de l'empilage, en particulier en continu, en piles verticales disposées côte-à-côte, éventuellement tangentes entre elles, de disques plans circulaires sans aucun contact du dispositif d'empilage avec les faces supérieure ou inférieure desdits disques.

Le dispositif selon l'invention, qui permet de résoudre ce problème technique, comporte, comme cela est connu, deux bras verticaux, généralement disposés symétriquement par rapport à la direction d'avancement des disques et une butée arrière axiale; la position des bras étant réglable vis à vis de la butée axiale en fonction du diamètre des disques à empiler, augmenté d'un certain jeu. Ce jeu est positif et au maximum égal à 0,5 % du diamètre des disques. Ces bras sont fixés à une structure mobile verticalement et/ou transversalement (selon deux directions perpendiculaires et/ou en rotation autour d'un axe vertical), et la butée axiale est solidaire de l'alimentation en disques et mobile selon une verticale.

2                    0216713

A l'aplomb de la butée arriere et solidaire de la structure mobile portant les bras, se trouve un support arrière axial, situé sensiblement au niveau de l'extrémité inférieure des bras.

Ce dispositif est caractérisé en ce que l'extrémité inférieure d'au moins un des bras verticaux et/ou du support arrière sont munis d'un mors de serrage, dont le déplacement, sensiblement perpendiculaire à l'axe de la pile, et dont la face d'appui est sensiblement parallèle à cet axe, permet d'immobiliser plusieurs disques de la pile en formation par appui de la tranche de ceux-ci d'une part sur le mors de serrage et d'autre part sur les bras opposés; on peut ainsi constituer un "faux-fonds" provisoire, dont l'utilité sera explicitée plus loin, dans la description de l'utilisation du dispositif.

Pour éviter de détériorer la tranche des disques, le mors de serrage et les bras opposés sont constitués et/ou recouverts d'un matériau élastique non métallique (tel que caoutchouc, élastomère synthétique, matière plastique, cuir, etc...) et aussi résistant à l'usure que possible.

Chacun des mors est commandé par tout système connu (mécanique, électromécanique, pneumatique, hydraulique, etc...); cependant, pour des raisons d'encombrement minimal et de simplicité de réalisation, les systèmes pneumatiques ou hydrauliques sont préférés.

Pour assurer un fonctionnement fiable, le nombre de disques serrés par le mors doit être suffisant, et la hauteur utile du mors est, de préférence, au moins égale à 3 cm.

Pour obtenir une meilleure prise des disques immobilisés (faux-fonds), il est préférable que le mors présente en position de serrage, une face d'appui pouvant faire un angle $\alpha$ allant jusqu'à 5° avec la verticale de manière à assurer un serrage plus important des disques inférieurs. Le mors peut donc soit se déplacer linéairement et présenter une face d'appui oblique faisant l'angle $\alpha$ avec la verticale, soit se déplacer de façon circulaire dans un plan axial (passant par l'axe de la pile) pour assurer cette inclinaison $\alpha$. L'inclinaison de la face d'appui permet également de compenser l'usure éventuellement irrégulière du revêtement du bras de l'empileur au niveau de la zone de serrage.

Dans une réalisation préférentielle, il n'existe qu'un mors de serrage dans le support arrière situé sur l'axe de défilement et les deux bras d'empilage opposés au mors de serrage présentent une surlongueur de 5 mm environ.

Cette surlongueur est utile lorsque les disques ne sont pas parfaitement plans; d'autre part, elle permet une meilleure séparation du "faux-fonds" du sommet de la pile en cours de formation.

Les bras et le support sont de préférence disposés à 120° les uns des autres.

Afin d'amortir au maximum les chocs des disques sur leur tranche, lors de l'empilage (dispositif anti-rebond), les bras peuvent être constitués d'un élément rigide supportant une bande métallique relativement douce, mobile dans le sens transversal par rapport aux bras et sur laquelle est rapporté le revêtement anti-usure.

L'invention sera mieux comprise à l'aide des figures ci-après.

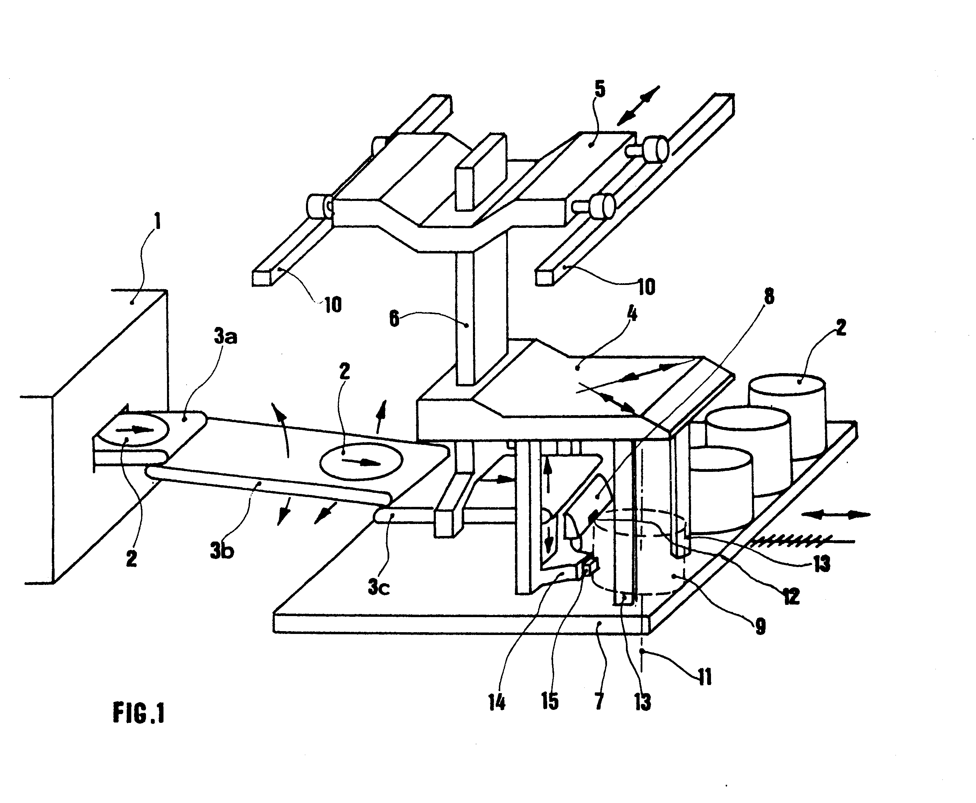

. La figure 1 représente une disposition générale et schématique d'une alimentation en disques pour un dispositif empileur selon l'invention.

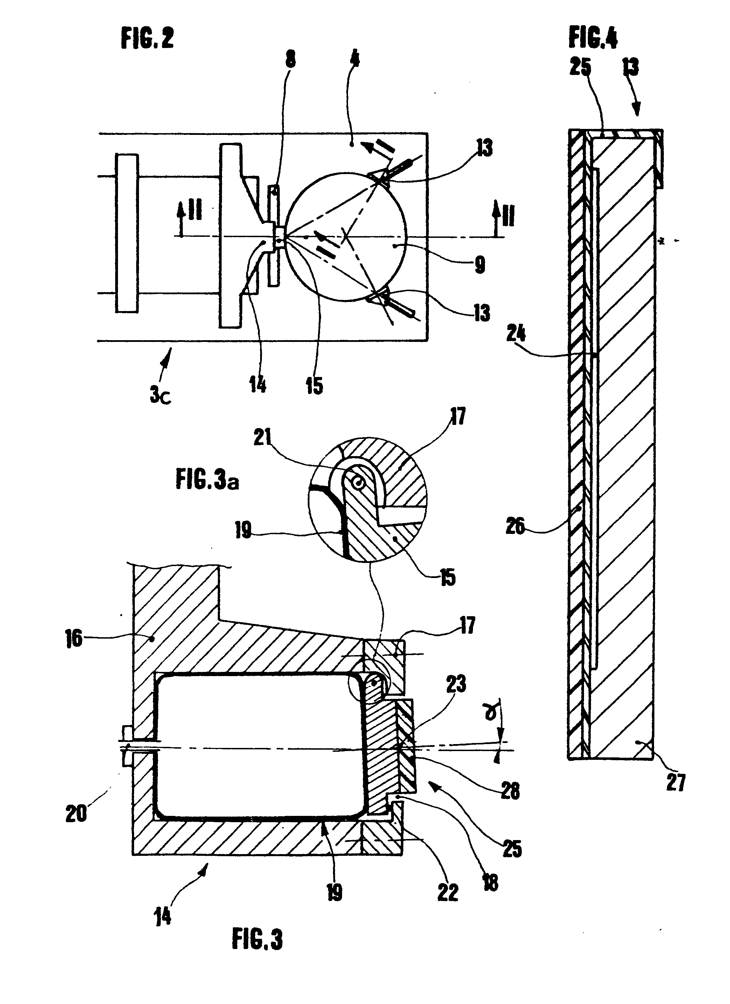

. La figure 2 représente une vue en plan de dessous du dispositif empileur selon l'invention.

. La figure 3 représente une coupe axiale d'un dispositif de serrage selon l'invention selon la ligne II.II de la figure 2.

. La figure 3a représente, en coupe, un détail de la figure 3.

. La figure 4 représente une coupe verticale selon la ligne I.I de la figure 2 d'un bras de l'empileur.

La figure 1 représente une presse de découpage (1) de disques métalliques (2), évacués par 3 convoyeurs (3a, 3b, 3c) vers le dispositif empileur (4) d'axe (11) lequel est monté sur un système de chariot (5) se déplaçant sur des rails (10) et comportant une tête d'empilage (6) mobile verticalement, deux bras verticaux (13) et un support (14) de mors de serrage (15).

Les mouvements relatifs de ces différents éléments sont schématisés par les flèches.

Le dispositif d'empilage se déplace au-dessus d'une embase (7) destinée au transport (palette) des disques empilés ou à d'autres opérations ultérieures telles qu'un traitement thermique.

Une butée arrière (8) munie d'un détecteur (12), qui permet de repérer le sommet de la pile de disques (9) en cours de formation, est solidaire des mouvements du convoyeur (3c) selon une direction verticale.

La figure 2 représente une vue en plan de dessous du dispositif (4) selon l'invention sur laquelle on distingue le convoyeur (3c), le support (14) de mors de serrage (15), la butée arrière (8), la pile de disques (9) et les deux bras verticaux (13).

La figure 3 représente en coupe le support (14) du mors de serrage (15) constitué d'une enceinte (16) fermée par un couvercle (17) percé d'une ouverture (18) laissant passer le mors (15) et contenant une vessie (19) alimentée par un fluide moteur par un ajutage (20).

Le mors (15) est mobile autour d'un axe horizontal (21) à sa partie supérieure et plaqué contre la vessie par un ressort (22).

Le mors (15) est revêtu sur sa face d'appui (28) d'une couche anti-usure (23) et peut pivoter autour de son axe d'un angle $\alpha$.

La figure 4 représente la coupe axiale d'un bras (13) constitué d'une butée verticale de section transversale triangulaire (27), par exemple en acier, présentant sur sa face d'appui un évidement (24) ayant une profondeur d'au moins 1 mm, sur lequel est déposée une lame d'aluminium recuit (25) recouverte d'une couche anti-usure en plastique (26). Cette structure permet d'amortir convenablement les chocs sur la tranche de disques (2) lors de l'empilage en (9).

Le dispositif suivant l'invention fonctionne de la manière suivante :

Etat initial :

La palette (7) est vide; le chariot d'empilage (5) et la table de palettisation sont positionnés de telle manière que l'axe (11) de l'empileur (4) soit à la verticale de l'emplacement choisi pour la première pile; la tête d'empilage (6) est en position basse et le dispositif empileur (4) en position haute par rapport à cette dernière. Le mors (15) est desserré et la base des bras (13) est légèrement au-dessus de la palette (7).

La presse (1) étant mise en fonctionnement, les disques (2) sont amenés a l'empileur (4) par les convoyeurs (3a, 3b, 3c) et s'empilent entre ses bras (13) et butée arrière (8). Lorsque le sommet de la pile en formation (9) atteint le niveau du détecteur (12), celui-ci commande la montée discrète de la tête d'empilage et de l'empileur.

Lorsque l'empileur atteint une position telle que la base du mors de serrage (15) soit au niveau du sommet de la première pile, on actionne ce dernier.

La tête d'empilage (6) remonte alors rapidement séparant ainsi du sommet de la pile un faux-fonds provisoire entre les bras de l'empileur (13) et le mors (15); c'est sur ce faux-fonds que continuent à s'empiler les disques pendant les phases suivantes.

Pendant ce temps, le chariot (5) et/ou la palette (7) sont déplacés de manière à amener l'empileur (4) au-dessus de l'emplacement de la pile suivante.

La tête d'empilage (6) est alors descendue de manière à ce que l'extrémité inférieure des bras (13) revienne sensiblement au niveau de la palette et on desserre alors le mors de serrage (15).

Le mouvement d'empilage recommence alors pour la deuxième pile (voir état initial) dont la base vient d'être constituée.

Ce dispositif, en plus de la préservation intégrale de l'état de surface des disques, présente encore les avantages suivants :

- grande simplicité de construction qui assure une grande fiabilité de marche et/ou une maintenance aisée.
- faible encombrement des bras, ce qui autorise l'empilage côte à côte en piles jointives de disques allant jusqu'à 100 mm environ de diamètre minimum.
- hauteur de chute des disques faible et sensiblement constante quelle que soit la hauteur de la pile.
- automatisation aisée des différents mouvements du dispositif.

L'invention s'applique à l'empilage de disques de toute nature (métaux et alliages, carton, bois, matière plastique, etc...).

## REVENDICATIONS

1. Dispositif empileur de disques comprenant un bâti mobile muni de deux bras verticaux (13) et un support arrière axial (14), circonscrits au diamètre des disques à empiler, et disposés symétriquement par rapport à la direction d'avancement des produits, caractérisé en ce que l'extrémité inférieure d'au moins un des bras et/ou du support arrière sont munis d'un mors de serrage (15) dont le déplacement est sensiblement perpendiculaire à l'axe (11) de la pile de disques (9) en cours de formation et dont la face d'appui (28) est sensiblement parallèle à cet axe (11).

2. Dispositif selon la revendication 1, caractérisé en ce que la hauteur utile de mors est au moins égale à 3 cm.

3. Dispositif selon l'une des revendications 1 ou 2, caractérisé en ce que l'empileur ne comporte qu'un seul mors de serrage porté par le support arrière.

4. Dispositif selon l'une des revendications 1 à 3, caractérisé en ce que les bras (13) et le support arrière (14) sont disposés à 120° les uns des autres.

5. Dispositif selon l'une des revendications 1 à 4, caractérisé en ce que la face d'appui du mors peut prendre une inclinaison faible, d'environ 5° maximum, par rapport à la verticale.

6. Dispositif selon l'une des revendications 1 à 5, caractérisé en ce que les bras (13) présentent une surlongueur d'environ 5 mm par rapport à la base du mors de serrage (15).

7. Dispositif selon l'une des revendications 1 à 6 caractérisé en ce que le mors de serrage et/ou les bras sont constitués et/ou recouverts d'un matériau élastique non métallique, résistant à l'usure.

8. Dispositif selon la revendication 7, caractérisé en ce qu'on interpose entre le revêtement protecteur (26) et le support vertical (27) une lame métallique à faible élasticité (24) sur un évidement (24) côté support (27).

9. Utilisation du dispositif selon l'une des revendications 1 à 8, caractérisée en ce que le jeu entre les disques empilés (9) et le cercle inscrits entre les bras (13) et à la butée axiale (8) est positif et au plus égal à 0,5 % du diamètre des disques (2).

FIG.1

FIG.2

FIG.4

FIG.3a

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,Y | GB-A-2 010 224 (ALUMINIUM COMPANY OF AMERICA) * En entier * | 1 | B 65 G 57/112 |
| Y | PATENTS ABSTRACTS OF JAPAN, vol. 8, no. 22 (M-272)[1459], 31 janvier 1984; & JP-A-58 181 515 (TAYOSHI SANGYO K.K.) 24-10-1983 | 1 | |

DOMAINES TECHNIQUES RECHERCHES (Int. Cl.4)

B 65 G
B 65 H
B 21 D

Le present rapport de recherche a été etabli pour toutes les revendications

| Lieu de la recherche | Date d'achèvement de la recherche | Examinateur |
|---|---|---|
| LA HAYE | 20-11-1986 | OSTYN E.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82